# EUROPÄISCHE PATENTSCHRIFT

(11) **EP 3 377 781 B1**
(45) Veröffentlichungstag und Bekanntmachung des Hinweises auf die Patenterteilung: **09.10.2019**
(21) Anmeldenummer: 16801962.8
(22) Anmeldetag: 10.11.2016
(51) Int. Cl.: F16C 29/04, F16C 29/12, F16F 6/00, F16F 7/10

(54) **SELBSTZENTRIERENDE ROLLENFÜHRUNG**
SELF-CENTERING ROLLER GUIDE
GUIDAGE À GALETS À CENTRAGE AUTOMATIQUE

(30) Priorität: 17.11.2015 EP 15003273
(43) Veröffentlichungstag der Anmeldung: 26.09.2018
(73) Patentinhaber: ESM Energie- und Schwingungstechnik Mitsch GmbH, 64646 Heppenheim (DE)
(72) Erfinder: GLANZNER, Sebastian, 64653 Lorsch (DE)
(74) Vertreter: Benz, Jürgen
(86) Internationale Anmeldenummer: PCT/EP2016/001873
(87) Internationale Veröffentlichungsnummer: WO 2017/084747

(56) Entgegenhaltungen:
- EP-A2- 2 080 931
- WO-A2-2013/143845
- US-A- 3 003 739
- US-A1- 2015 090 545

## Beschreibung

Die Erfindung betrifft eine selbstzentrierende Führung für entlang ihrer Längsachse bewegte Rohre, Stangen und Stäbe, wie sie in zahlreichen Maschinen und Vorrichtungen eingesetzt werden. Die Erfindung betrifft insbesondere eine selbstzentrierende Rollenführung mit deren Hilfe das besagte bewegte Teil über entlang seines Umfangs angeordnete Laufrollen, reibungsarm geführt werden kann, wobei die Laufrollen durch entsprechend konstruierte und angeordnete Spannvorrichtungen ihre Fähigkeit zur Selbstzentrierung erhalten.
Die Erfindung betrifft weiter Schwingungsdämpfer und Schwingungstilger, welche mit derartigen Rollenführungen ausgestattet sind.

In zahlreichen Maschinen und Vorrichtungen müssen Stangen mechanisch hin- und her bewegt werden. Dabei ist es oft unumgänglich diese Stangen an einem oder mehreren Punkten zu führen, was zu erhöhten Reibungseinflüssen führt. Üblicherweise werden für diese Zwecke im Stand der Technik unmittelbar Gleitlager oder Kugellager eingesetzt. Diese Lager können jedoch zu Problem führen, wenn während der Bewegung der Stange radiale Kräfte auf diese einwirken. Erhöhte Reibung und verringerte Haltbarkeit der Lager sind die Folge.

Aus diesem Grund ist es sinnvoll in solchen Fällen Lager einzusetzen, welche derartige Belastungen und Kräfte berücksichtigen können.

Es bestand somit die Aufgabe eine entsprechende Führung von sich hin- und her bewegenden Stangen und Rohren zur Verfügung zu stellen, welche nicht nur gewohnt reibungsarm ist, sondern auch in der Lage ist, insbesondere regelmäßig oder unregelmäßige transversale Kräfte auf die Stange oder das Rohr automatisch auszugleichen, und die Stange stets zentriert zu halten und zu führen.

Die Aufgabe wurde durch die vorliegende Erfindung, wie sie in den Ansprüchen, der folgenden Beschreibung und der Abbildungen näher dargelegt ist, gelöst.

Gegenstand der Erfindung ist somit eine selbstzentrierende Rollenvorrichtung zum reibungsarmen Führen von Rohren oder Stäben, welche in Richtung ihrer Längsachse bewegt werden, umfassend eine mit Laufrollen ausgestattete Spannvorrichtung, wobei die Laufrollen im Wesentlichen gleichmäßig entlang des Umfanges des zu führenden Rohres oder Stabes angeordnet, in Bewegungsrichtung ausgerichtet und in radialer Richtung federelastisch beweglich sind, wobei die Spannvorrichtung (6) einen ersten und einen zweiten Spannring (6a, 6b) aufweist, welche durch Federelemente (7) miteinander verbunden und gegeneinander verspannt sind, und der erste Spannring (6a) mit der ersten Hälfte einer vorzugsweise geradzahligen Anzahl von Laufrollen (1) aufweisenden ersten Rollenhalterungen (3a) über Abstandshülsen (10a) und der zweite Spannring (6b) mit der zweiten Hälfte von Laufrollen (1) aufweisenden Rollenhalterungen (3b) über Abstandshülsen (10b) verbunden ist, wobei jede der besagte Rollenhalterungen (3a, 3b) über eine parallel zum Rohr (8) angeordneten Achse (4) mit einer ringförmigen Trägervorrichtung (5) verbunden ist, durch deren konzentrische Öffnung besagtes Rohr (8) oder besagter Stab (8) berührungsfrei mittels der außerhalb der Trägervorrichtung (5) angeordneten Laufrollen (1) geführt und relativ zur Trägervorrichtung (5) bewegt wird.

Hierbei umfasst die Rollenhalterung (3a, 3b) mindestens eine Laufrolle (1), welchen über eine Rollenachse (2) mit der Rollenhalterung befestigt ist, wobei die Rollenhalterung (3a, 3b) vorzugsweise mit der Achse (4) in der Weise verbunden ist, dass sie um diese radial bewegbar ist, um entsprechende Bewegungen der Vorrichtungen mitmachen zu können. Ferner ist die Rollenhalterung (3a, 3b) vorzugsweise mit der betreffenden Abstandshülse (10a, 10b) verbunden ist.

Vorzugsweise ist der erste Spannring ein vorderer Spannring (6a) und der zweite Spannring ein hinterer Spannring (6b), ebenso wie die erste Rollenhaltung eine vordere Rollenhalterung (3a) und die zweite Rollenhalterung eine hintere Rollenhalterung (3b) ist. Dabei ist die vordere Rollenhalterung (3a) über die Abstandshülse (10a) mit der vorderen Spannvorrichtung (6a) verbunden, und die hintere Rollenhalterung (3b) über die Abstandshülse (10b) mit der hinteren Spannvorrichtung (6b) verbunden..

Gegenstand ist ferner auch ein rotationsymmetrischer Magnetschwingungsdämpfer umfassend ein inneres Rohr und ein äußeres Rohr, wobei ein Rohr mit einer Trägervorrichtung fest verbunden ist und das andere Rohr innerhalb des ersten Rohres berührungslos bewegbar ist, wobei ein Rohr aus einem nicht magnetisierbaren leitfähigem Material (beispielsweise Aluminium, Kupfer) besteht, und das andere Rohr sich zusammensetzt aus einem oder mehreren permanentmagnetischen oder magnetisierbaren Ringen oder Ringsegmenten, wobei diese magnetischen oder magnetisierbaren Elemente so angeordnet sind, dass Nord- und Südpol entweder radial nach innen oder radial nach außen in Bezug auf die Längsachse oder des nicht-magnetisierbaren Rohrs weisen, wobei der besagte Dämpfer eine erfindungsgemäße selbstzentrierende Rollenvorrichtung wie folgend beschrieben, aufweist. Diese gewährleistet eine reibungsfreie relative Bewegung des nicht magnetischen leitfähigen Rohrs gegenüber den besagten magnetischen oder magnetisierbaren Rohrelementen.

Gegenstand der Erfindung sind ferner Schwingungstilger, insbesondere für Windkraftanlagen, welche derartige erfindungsgemäße Rollenführungen aufweisen.

Gegenstand sind letztlich auch Maschinen und Vorrichtungen, insbesondere Windkraftanlagen, welche eine erfindungsgemäße selbstzentrierende Rollenführung aufweisen.

Im Folgenden und in den Ansprüchen wird auf folgende Referenzzeichen Bezug genommen:
- (1): Rolle
- (2): Rollen-Achse
- (3): Rollenhalterung
- (3a): Rollenhalterung (vorne)
- (3b): Rollenhalterung (hinten)
- (4): Achse für Laufrolleneinheit
- (5): Trägervorrichtung mit Befestigungsvorrichtung für Bauteil (4)
- (6): Spannvorrichtung
- (6a): vorderer Spannring der Spannvorrichtung
- (6b): hinterer Spannring der Spannvorrichtung
- (7): Federelement für Spannvorrichtung
- (8): hin- und her zu bewegendes Rohr / Stange
- (9): äußeres Rohr / Basisstruktur
- (10): Röhrchen / Abstandshülse
- (10a): Röhrchen / Abstandshülse (vorne)
- (10b): Röhrchen / Abstandshülse (hinen)
- (11): Langloch
- (12): Laufrolleneinheit umfassend Rolle (1), Achse (2) und Halterung (3)
- (13): selbstzentrierende Rollenvorrichtung umfassend Merkmale (1) bis (11)
- (14): Magnetringe
- (15): Pendel mit Pendelmasse
- 16): Magnetdämpfer
- (17): Verwindungssteifer Haltering

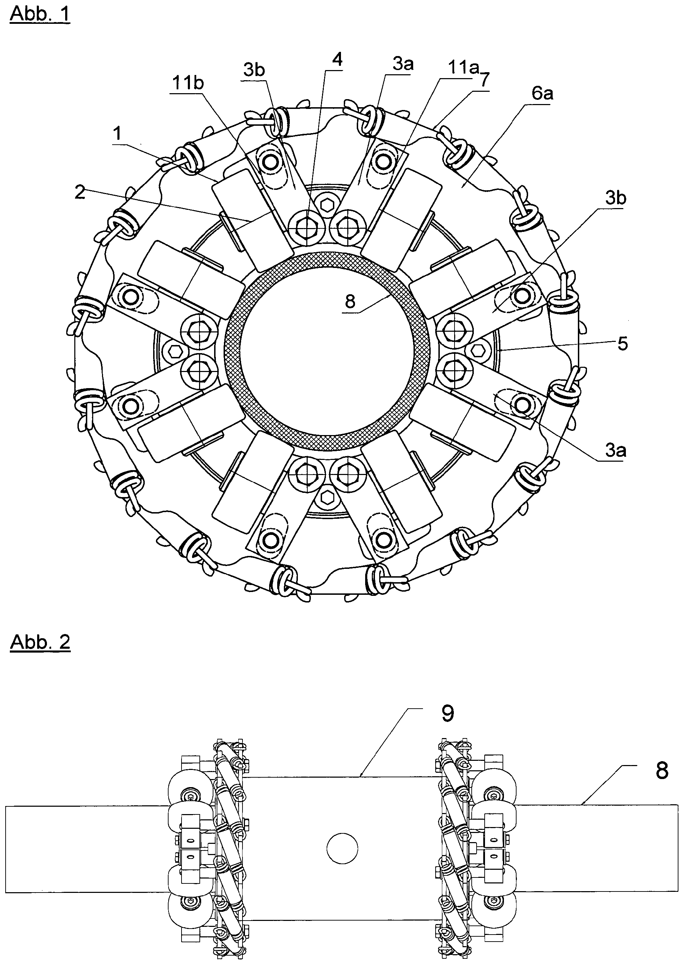

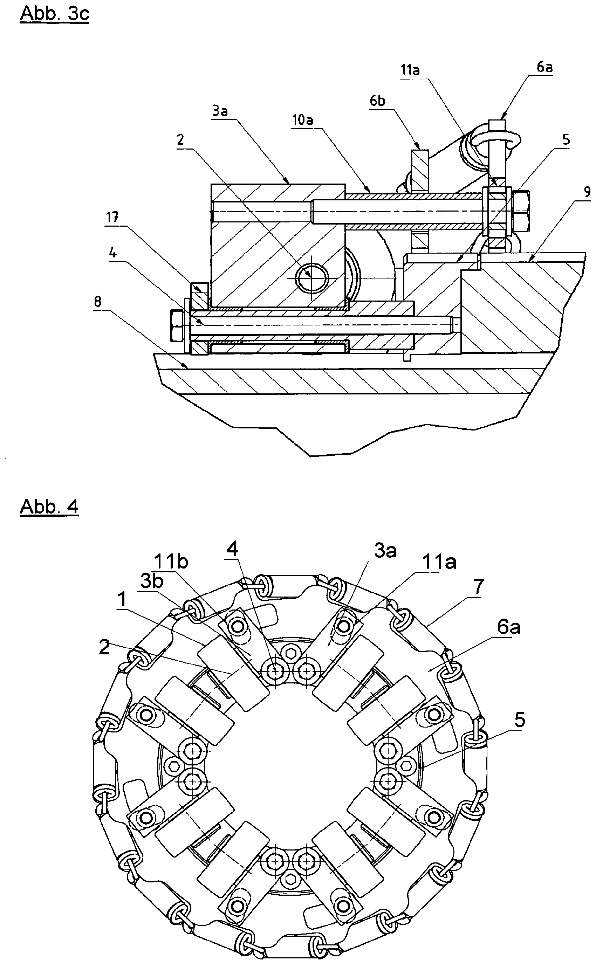

Die erfindungsgemäße selbstzentrierende Rollenanordnung umfasst im Wesentlichen wie in Abb. 1 und Abb. 4 dargestellt, eine im Wesentlichen ringförmige Spannvorrichtung (6), sowie eine Laufrollenkonstruktion, die miteinander verbunden sind.

Die Laufrollenkonstruktion wiederum umfasst eine vorzugsweise aber nicht notwendigerweise eine geradzahlige Anzahl von Laufrolleneinheiten (12), vorzugsweise mindestens 4, insbesondere 4, 6, 8, 10 oder 12.

Jede Laufrolleneinheiten (12) umfasst wiederum mindestens eine, vorzugsweise eine Laufrolle (1) mit Laufrollenhalterungen (3), wobei die Laufrolle auf eine Rollenachse (2) gesteckt ist. Die Laufrollen können aus Kunststoff oder einem anderen üblichen Rollenwerkstoff (Aluminium, Stahl, Carbonfaser, etc.) bestehen und gegebenenfalls über ein oder mehrere Gleit- oder Kugellager verfügen.

Die 4, 6, 8, 10 oder 12 Laufrolleneinheiten (12) sind radial um das zu zentrierende Rohr (8) angeordnet, und durch die Spannvorrichtung (6) so gegen das Rohr (8) gepresst, dass sie dieses zentrieren, ohne dass dabei die Reibung bei axialer Bewegung des Rohres hinderlich wird.

Der Rollenhalterungen (3) sind drehbar/bewegbar auf Halterachsen (4) gesteckt, welche mit der vorzugsweise ringförmigen Trägerkonstruktion (5) verbunden sind.

Die Trägerkonstruktion (5) ist mit einer entsprechenden Basisstruktur (9) fest verbunden. Die Basisstruktur kann eine beliebige Maschine oder Vorrichtung sein. In einer besonderen Ausführungsform der Erfindung ist die Basisstruktur ein Schwingungsdämpfer oder ein Teil eines Schwingungsdämpfers, insbesondere ein rotationssymmetrischer aus zwei ineinander gesteckten und relativ gegeneinander bewegbaren Rohren bestehender Magnetdämpfer. Dabei wird die ringförmige Trägerkonstruktion (5) mit dem Rohr (9) des Dämpfers fest verbunden, welcher in eine besonderen Ausführungsform ein Magnetrohr oder eine Rohr aus ringförmigen Magnetsegmenten ist (Abb. 2).

Die Spannvorrichtung (6) umfasst erfindungsgemäß zwei Spannringe (6a, 6b), einen vorderen Spannring (6a) und einen hinteren Spannring (6b), die gegeneinander durch Federelemente (7) verspannt sind. Als Federelemente kommen Druck- oder Zugfedern in Frage, ggf. auch entsprechende Elastomerfedern. Anzahl und Federsteifigkeit richten sich nach Größe des Bauteils und Wert der angreifenden axialen Kraft. Die Federelemente (7) werden in Halterungen, Haken oder Ösen an den Spannringen (6) befestigt, bzw. eingehängt, und spannen diese vor.

An jeder Rollenhalterung (3) ist eine Abstandshülse oder ein Röhrchen (10) angeschraubt oder anderweitig fest angebracht, welche(s) wiederum mit der Spannvorrichtung (6) verbunden ist.

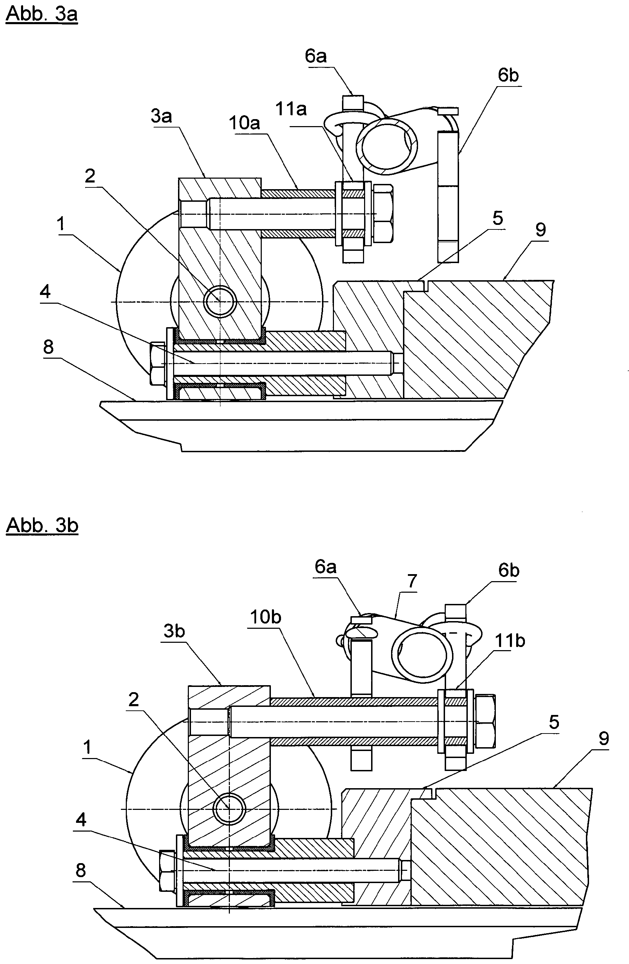

In Abb. 3a und 3b ist im Detail dargestellt, wie erfindungsgemäß die Rolleneinheiten (12) mit den Spannvorrichtungen (6a)(6b) verbunden sind:
Dabei ist erfindungsgemäß die Hälfte der Laufrolleneinheiten (12), bestehend aus Laufrolle (1), Rollenachse (2) und Rollenhalterung (3), mit ein und demselben der beiden Spannringe (6), vorzugsweise dem vorderen (6a) oder dem hinteren (6b) Spannring verbunden, während die andere Hälfte mit dem anderen der beiden Spannringringe (6), vorzugsweise den hinteren (6b) oder dem vorderen (6a) verbunden ist. Somit sind die Rollenhalterungen (3a) (und damit auch die entsprechenden Laufrollen (1)) über die Abstandshülsen/die Röhrchen (10a) mit dem vorderen Spannring (6a) verbunden, während die Rollenhalterungen (3b) mit den entsprechenden Laufrollen (1) über die Abstandshülsen /die Röhrchen (10b) mit dem hinteren Spannring (6b) verbunden sind. Aus Kräfte-Symmetriegründen wechseln sich vorzugsweise Laufrolleneinheiten (12) gemäß (1, 2, 3a, 10a), welche mit dem vorderen Ring (6a) der Spannvorrichtung (6) verbunden sind, mit Laufrolleneinheiten (12) gemäß (1, 2, 3b, 10b), welche mit dem hinteren Spannring (6b) verbunden sind, ab. Somit ist also jede zweite Laufrollenvorrichtung (12) mit dem gleichen Spannring (6a) oder (6b) verbunden.

Damit die Federkräfte und durch sie initiierte Bewegungen der Laufrolleneinheiten (12), insbesondere der Abstandshülsen (10a, 10b) in radialer Richtung wirksam werden können und gleichzeitig die tangentiale umlaufende Kraft übertragen werden kann, befinden sich Langlöcher (11) an den betreffenden Positionen der Spannringe (6a) (6b). Somit ist genügend Platz für vorgesehenen Bewegungen der Laufrollenkonstruktion in radialer Richtung. Dazu gehört auch, dass sich die Rollenhalterungen auf den Achsen (4) bewegen können.

Eine weitere Ausführungsform der Erfindungsgemäßen Rollenführung ist in Abb. 3c dargestellt. Hierbei ist ein metallener steifer Ring (17) entlang der Rolleneinheiten angebracht, um bei besonderen Belastungen die Konstruktion verwindungssteif zu machen.

Die erfindungsgemäße Rollenvorrichtung funktioniert auf folgende Weise:
Die Federelemente (7) spannen die beiden Spannringe (6a) (6b) vor und sorgen dafür, dass alle Laufrollen (1) mit der gleichen Kraft an das zu zentrierende Rohr 8 gepresst werden. Eine externe radiale Kraft auf das zu zentrierende bewegte Rohr (8) führt dazu, dass die Laufrollen (1) in Kraftrichtung etwas einfedern und die gegenüberliegenden Laufrollen (1) dadurch mit geringerer Kraft anliegen. Die Anpresskraft auf die Rollen (1) in Kraftrichtung steigt somit. Die beiden Spannringe (6a) (6b) der Spannvorrichtung (6) werden so zueinander verschoben und die Kräfte in den Federelementen (7) steigen und fallen von Federelement zu Federelement. Wird die externe Kraft entfernt, gleichen sich die Federkräfte wieder an und das Rohr (8) wird wieder vollständig zentriert. Die Vorspannkraft für die einzelnen Laufrollen (1) hängt dabei von der Anzahl und den Vorspannkräften der einzelnen Federelemente (7) ab. Die gesamte radiale Steifigkeit der Rollenanordnung hängt weiterhin von der Anzahl und der Steifigkeit der einzelnen Federelemente (7) ab. Je nach Notwendigkeit können mehr oder weniger Federelemente (7) verwendet werden, wodurch ebenfalls Einfluss auf die Steifigkeit und somit auf die Zentrierung genommen werden kann.

Die erfindungsgemäße selbstzentrierende Rollenanordnung macht ein manuelles Ausrichten und Vorspannen der einzelnen Laufrollen (1) überflüssig. Die Rollen (1) werden gleichmäßig an das Laufrohr oder die Laufstange (8), wodurch sich automatisch eine Zentrierung einstellt.

Bei einer Temperaturerhöhung dehnt sich das Rohr / die Stange (8) aus (z. B. bei einem Aluminium Rohr oder Stab), und auch der Durchmesser der Laufrollen (1) (z.B. aus Kunststoff) wird ebenfalls größer. Eine fest eingestellte Laufrolle (1) würde hierfür eine starke Änderung der Vorspannkraft auf die Rollen (1) führen, was wiederum in nicht gewünschter Weise das Rohr (8) belastet. Bei einer Temperatursenkung hingegen ziehen sich das Rohr und die Rollen zusammen. Bei einer fest eingestellten Laufrolle sinkt somit die Vorspannkraft und es kann sogar zu einem Kontaktverlust und damit zu einem Verlust der Zentrierung führen. Mit der selbstzentrierende Rollenanordnung sind die Änderungen der Vorspannkraft minimal und gleichzeitig wird die Zentrierung gewährleistet da es zu keinem Kontaktverlust kommt.

Die selbstzentrierende Rollenanordnung lässt sich einfach vormontieren (siehe Abb.4). Die Federelemente (7) (hier Zug-Spiralfedern) können beinahe kraftfrei in die Ösen der Spannringe (6a) (6b) eingehängt werden. Dabei ragen alle Laufrollen (1) weiter in Richtung Mittelpunkt der Rollenanordnung. Sobald alle Federn eingehängt wurden, kann die ringförmige Trägervorrichtung (5) der erfindungsgemäßen Rollenanordnung mit dem Basisstruktur (9) verschraubt werden. Ein Ende des Rohrs oder Stabes (8) kann mit einem ansteigenden Konus mit geringer Steigung versehen sein, so dass beim Aufschieben des Basisstruktur (beispielsweise ein Schwingungsdämpfer) über den Konus die Laufrollen (1) immer weiter nach außen gedrückt und dabei die Federelemente (7) gespannt werden. Gleichzeitig wird das Rohr (8) schon während des Aufschiebens zentriert. Die Federelemente (7) sind nun auf die volle Zugkraft vorgespannt.

Die Erfindungsgemäße selbstzentrierende Rollenvorrichtung ist insbesondere geeignet, in Schwingungsdämpfern, vorzugsweise in rotationssymmetrischen Magnetdämpfern eingesetzt zu werden, da hier ein nicht magnetisches, nicht magnetisierbares leitendes metallisches Rohr (z.B. aus Aluminium oder Kupfer) innerhalb eines magnetischen Rohrs (Permanentmagnete oder magnetisierbare Spulen) oder einer entsprechenden magnetischen ringförmigen Anordnung relativ bewegt wird, wodurch eine magnetische Dämpfung erzielt wird. Somit kann ein mit dem Dämpfer verbundenes Schwingungssystem gedämpft werden, beispielsweise ein schwingendes Pendel eines Schwingungstilgers.

Ein entsprechender Magnetschwingungstilger ist beispielsweise in der WO 2016/023628 im Detail beschrieben, einem Dokument, dass unter Artikel 54(3) EPÜ fällt.

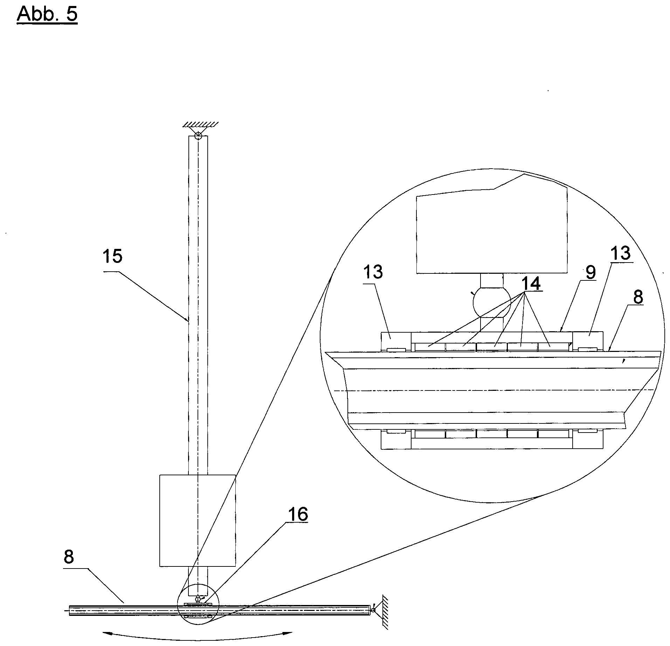

Ein solches System ist auch in Abb. 5 schematisch dargestellt. Position (13) in Abb. 5 entspricht der erfindungsgemäßen Rollenvorrichtung, welche hier am vorderen und hinteren Ende des Dämpfers montiert ist. Die Rollenanordnung muss das Rohr (8) im Magnetdämpfer zentrieren, auch bei sich ändernden externen radialen Kräften. Gleichzeitig kann in vorteilhafter Weise eine axiale Bewegung des Dämpfers mit minimalen Rollwiderständen ermöglicht werden.

## Patentansprüche

1. Selbstzentrierende Rollenvorrichtung zum reibungsarmen Führen von Rohren oder Stäben (8), welche in Richtung ihrer Längsachse bewegt werden, umfassend eine mit einer Anzahl von Laufrolleneinheiten (12) ausgestatteten Spannvorrichtung (6), wobei die Laufrolleneinheiten (12) im Wesentlichen gleichmäßig entlang des Umfanges des zu führenden Rohres oder Stabes (8) angeordnet, in Bewegungsrichtung ausgerichtet und in radialer Richtung federelastisch beweglich sind,
**dadurch gekennzeichnet, dass** die Spannvorrichtung (6) einen vorderen und einen hinteren Spannring (6a, 6b) aufweist, welche durch Federelemente (7) miteinander verbunden und gegeneinander verspannt sind, wobei der vordere Spannring (6a) mit der ersten Hälfte der Anzahl von Laufrolleneinheiten (12) über Abstandshülsen (10a) und der hintere Spannring (6b) mit der zweiten Hälfte der Anzahl der Laufrolleneinheiten (12) über Abstandshülsen (10b) verbunden ist, wobei jede der besagten Laufrolleneinheiten über eine parallel zum Rohr (8) angeordneten Achse (4) mit einer ringförmigen Trägervorrichtung (5) verbunden ist, durch deren konzentrische Öffnung besagtes Rohr (8) oder besagter Stab (8) berührungsfrei mittels der außerhalb der Trägervorrichtung (5) angeordneten Laufrolleneinheiten (12) geführt und relativ zur Trägervorrichtung (5) bewegt wird.

2. Selbstzentrierende Rollenvorrichtung nach Anspruch 1, **dadurch gekennzeichnet, dass** jede Laufrolleneinheit (12) eine vordere Rollenhalterung (3a) und eine hintere Rollenhalterung (3b) und mindestens eine Laufrolle (1) umfasst, welche über eine Rollenachse (2) mit der betreffenden Rollenhalterung befestigt ist, und die Rollenhalterung (3a, 3b) mit der Achse (4) verbunden ist, und um diese radial bewegbar ist.

3. Selbstzentrierende Rollenvorrichtung nach Anspruch 2, **dadurch gekennzeichnet, dass** die vordere Rollenhalterung (3a) mittels der Abstandshülsen (10a) mit dem vorderen Spannring (6a), und die hintere Rollenhalterung (3b) mittels der Abstandshülsen (10b) mit dem hinteren Spannring (10b) verbunden ist.

4. Selbstzentrierende Rollenvorrichtung nach Anspruch 2 oder 3, **dadurch gekennzeichnet, dass** die Laufrolleneinheiten (12) so um das Rohr (8) herum angeordnet sind, dass sie abwechselnd mit dem vorderen (6a) und dem hinteren (6b) Spannring verbunden sind.

5. Selbstzentrierende Rollenvorrichtung nach einem der Ansprüche 1 - 4, **dadurch gekennzeichnet, dass** die Spannringe (6a, 6b) im Wesentlichen radial angeordnete Langlöcher (11a, 11b) aufweisen, mit denen die Abstandshülsen (10a, 10b) und damit an diese befestigte Laufrolleneinheiten (12) in der Weise verbunden sind, dass sie sich in den Langlöchern (11a, 11b) bewegen können, entsprechend der über das Rohr (8) und die Laurollen (1) vermittelten einwirkenden Kräfte.

6. Selbstzentrierende Rollenvorrichtung nach einem der Ansprüche 1 - 5, **dadurch gekennzeichnet, dass** alle Laufrolleneinheiten (12) auf einer Seite der Spannvorrichtung (6) angeordnet sind, wobei der vordere Spannring (6a) Öffnungen aufweist, durch welche die Abstandshülsen (10b), zu dem hinteren Spannring (6b) geführt werden.

7. Selbstzentrierende Rollenvorrichtung nach einem der Ansprüche 1 - 6, **dadurch gekennzeichnet, dass** sie vier, sechs, acht, zehn oder zwölf Laufrolleneinheiten (12) aufweist.

8. Selbstzentrierende Rollenvorrichtung nach einem der Ansprüche 1 - 7, **dadurch gekennzeichnet, dass** die Federelemente (7) Druck-, oder Zugfedern, oder Elastomerfedern sind.

9. Selbstzentrierende Rollenvorrichtung nach einem der Ansprüche 1 - 8, **dadurch gekennzeichnet, dass** die Spannringe (6a, 6b) Haken oder Ösen haben, in denen die Federelemente (7) eingehängt sind.

10. Selbstzentrierende Rollenvorrichtung nach einem der Ansprüche 1-9, **dadurch gekennzeichnet, dass** die vordere und / oder hintere Rollenhalterung (3a) (3b) einen festen Ring aufweist, der die jeweiligen Rollenhalterungen miteinander verbindet und die Vorrichtung verwindungssteif macht.

11. Rotationssymmetrischer Magnetschwingungsdämpfer **dadurch gekennzeichnet, dass** er eine selbstzentrierende Rollenvorrichtung gemäß einem der Ansprüche 1 - 10 aufweist.

12. Rotationsymmetrischer Magnetschwingungsdämpfer nach Anspruch 11 ferner umfassend ein inneres Rohr und ein äußeres Rohr, wobei das eine Rohr mit einer Trägervorrichtung fest verbunden ist und das andere Rohr innerhalb des ersten Rohres berührungslos bewegbar ist, und das eine Rohr aus einem nicht magnetisierbaren leitfähigem Material besteht, während das andere Rohr sich zusammensetzt aus einem oder mehreren permanentmagnetischen oder magnetisierbaren Ringen oder Ringsegmenten (14), wobei diese magnetischen oder magnetisierbaren Elemente so angeordnet sind, dass Nord- und Südpol entweder radial nach innen oder radial nach außen in Bezug auf die Längsachse oder des nicht-magnetisierbaren Rohrs weisen, wobei die selbstzentrierende Rollenvorrichtung eine reibungsfreie relative Bewegung des nicht magnetischen leitfähigen Rohrs gegenüber den besagten magnetischen oder magnetisierbaren Rohrelementen gewährleistet.

13. Rotationssymmetrischer Magnetschwingungsdämpfer nach Anspruch 12, **dadurch gekennzeichnet, dass** die Trägervorrichtung (5) mit dem äußeren Rohr (9) fest verbunden ist, und das innere Rohr (8) durch die Rollenvorrichtung gegenüber dem äußeren Rohr (9) bewegt wird.

14. Rotationssymmetrischer Magnetschwingungsdämpfer nach einem der Ansprüche 11 - 13, **dadurch gekennzeichnet, dass** besagte Rollenvorrichtung vor und / oder hinter dem funktionellen Bereich des Magnetdämpfers angebracht ist.

15. Schwingungstilger umfassend mindestens ein Pendelseil oder eine Pendelstange mit einer Pendelmasse (15) und mindestens zwei rotationssymmetrischen Magnetdämpfern gemäß einem der Ansprüche 11 - 14.

## Claims

1. Self-centring roller device for low-friction guidance of tubes or rods (8) which are moved in the direction of their longitudinal axis, comprising a clamping device (6) fitted with a number of running roller units (12), where the running roller units (12) are arranged essentially uniformly along the periphery of the tube or rod (8) to be guided, are oriented in the movement direction and are movable in a spring-elastic manner in the radial direction,
**characterised in that** the clamping device (6) has front and rear clamping rings (6a, 6b), which are connected to one another by spring elements (7) and are tensioned against one another, where the front clamping ring (6a) is connected to the first half of the number of running roller units (12) via spacer sleeves (10a) and the rear clamping ring (6b) is connected to the second half of the number of running roller units (12) via spacer sleeves (10b), where each of the said running roller units is connected to a ring-shaped carrier device (5) via an axle (4) arranged parallel to the tube (8), which is passed through the concentric opening of said tube (8) or said rod (8) without contact by means of the running roller units (12) arranged outside the carrier device (5) and is moved relative to the carrier device (5).

2. Self-centring roller device according to Claim 1, **characterised in that** each running roller unit (12) comprises a front roller holder (3a) and a rear roller holder (3b) and at least one running roller (1), which is attached to the roller holder in question via a roller axle (2), and the roller holder (3a, 3b) is connected to the axle (4) and is movable radially around the latter.

3. Self-centring roller device according to Claim 2, **characterised in that** the front roller holder (3a) is connected to the front clamping ring (6a) by means of the spacer sleeves (10a), and the rear roller holder (3b) is connected to the rear clamping ring (10b) by means of the spacer sleeves (10b).

4. Self-centring roller device according to Claim 2 or 3, **characterised in that** the running roller units (12) are arranged around the tube (8) in such a way that they are connected alternately to the front clamping ring (6a) and the rear clamping ring (6b).

5. Self-centring roller device according to one of Claims 1 - 4, **characterised in that** the clamping rings (6a, 6b) have essentially radially arranged slots (11a, 11b), by means of which the spacer sleeves (10a, 10b) and thus running roller units (12) attached thereto are connected in such a way that they can move in the slots (11a, 11b), corresponding to the acting forces imparted via the tube (8) and the running rollers (1).

6. Self-centring roller device according to one of Claims 1 - 5, **characterised in that** all running roller units (12) are arranged on one side of the clamping device (6), where the front clamping ring (6a) has openings through which the spacer sleeves (10b) are passed to the rear clamping ring (6b).

7. Self-centring roller device according to one of Claims 1 - 6, **characterised in that** it has four, six, eight, ten or twelve running roller units (12).

8. Self-centring roller device according to one of Claims 1 - 7, **characterised in that** the spring elements (7) are compression or extension springs or elastomer springs.

9. Self-centring roller device according to one of Claims 1 - 8, **characterised in that** the clamping rings (6a, 6b) have hooks or eyes in which the spring elements (7) are hung.

10. Self-centring roller device according to one of Claims 1 - 9, **characterised in that** the front and/or rear roller holder (3a) (3b) has a fixed ring which connects the respective roller holders to one another and makes the device twist-stiff.

11. Rotationally symmetrical magnetic vibration damper, **characterised in that** it has a self-centring roller device according to one of Claims 1 - 10.

12. Rotationally symmetrical magnetic vibration damper according to Claim 11, furthermore comprising an inner tube and an outer tube, where the one tube is firmly connected to a carrier device and the other tube can be moved contactlessly inside the first tube, and the one tube consists of a non-magnetisable conductive material, while the other tube is composed of one or more permanent-magnetic or magnetisable rings or ring segments (14), where these magnetic or magnetisable elements are arranged in such a way that North and South poles point either radially inwards or radially outwards in relation to the longitudinal axis or the non-magnetisable tube, where the self-centring roller device ensures friction-free relative movement of the non-magnetic conductive tube relative to the said magnetic or magnetisable tube elements.

13. Rotationally symmetrical magnetic vibration damper according to Claim 12, **characterised in that** the carrier device (5) is firmly connected to the outer tube (9), and the inner tube (8) is moved relative to the outer tube (9) by the roller device.

14. Rotationally symmetrical magnetic vibration damper according to one of Claims 11 - 13, **characterised in that** said roller device is installed before and/or after the functional region of the magnetic damper.

15. Vibration damper comprising at least one pendulum cable or pendulum rod having a pendulum weight (15) and at least two rotationally symmetrical magnetic dampers according to one of Claims 11 -14.

## Revendications

1. Dispositif à rouleaux à auto-centrage pour le guidage à faible friction de tubes ou de tiges (8) qui sont déplacé(e)s dans la direction de leur axe longitudinal, comprenant un dispositif de serrage (6) qui est adapté avec un certain nombre d'unités de rouleau mobiles (12), dans lequel les unités de rouleau mobiles (12) sont agencées de façon essentiellement uniforme le long de la périphérie du tube ou de la tige (8) de telle sorte qu'elles soient guidées, elles sont orientées dans la direction de déplacement et elles peuvent être déplacées selon un mode d'élasticité par ressort dans la direction radiale ; **caractérisé en ce que** le dispositif de serrage (6) comporte des bagues de serrage avant et arrière (6a, 6b), lesquelles sont connectées l'une à l'autre par des éléments de ressort (7) et sont mises sous tension l'une contre l'autre, dans lequel la bague de serrage avant (6a) est connectée à la première moitié du nombre d'unités de rouleau mobiles (12) via des gaines d'espaceur (10a) et la bague de serrage arrière (6b) est connectée à la seconde moitié du nombre d'unités de rouleau mobiles (12) via des gaines d'espaceur (10b), dans lequel chacune desdites unités de rouleau mobiles est connectée à un dispositif de support en forme de bague (5) via un axe (4) qui est agencé parallèlement au tube (8), lequel est passé au travers de l'ouverture concentrique dudit tube (8) ou de ladite tige (8) sans qu'il n'entre en contact avec les unités de rouleau mobiles (12) qui sont agencées à l'extérieur du dispositif de support (5) et est déplacé par rapport au dispositif de support (5).

2. Dispositif à rouleaux à auto-centrage selon la revendication 1, **caractérisé en ce que** chaque unité de rouleau mobile (12) comprend un support de rouleau avant (3a) et un support de rouleau arrière (3b) et au moins un rouleau mobile (1), lequel est lié au support de rouleau en question via un axe de rouleau (2), et le support de rouleau (3a, 3b) est connecté à l'axe (4) et peut être déplacé radialement autour de ce dernier.

3. Dispositif à rouleaux à auto-centrage selon la revendication 2, **caractérisé en ce que** le support de rouleau avant (3a) est connecté à la bague de serrage avant (6a) au moyen des gaines d'espaceur (10a), et le support de rouleau arrière (3b) est connecté à la bague de serrage arrière (10b) au moyen des gaines d'espaceur (10b).

4. Dispositif à rouleaux à auto-centrage selon la revendication 2 ou 3, **caractérisé en ce que** les unités de rouleau mobiles (12) sont agencées autour du tube (8) de telle sorte qu'elles soient connectées en alternance à la bague de serrage avant (6a) et à la bague de serrage arrière (6b).

5. Dispositif à rouleaux à auto-centrage selon l'une des revendications 1 - 4, **caractérisé en ce que** les bagues de serrage (6a, 6b) comportent des fentes agencées essentiellement radialement (11a, 11b), fentes au moyen desquelles les gaines d'espaceur (10a, 10b) et par conséquent les unités de rouleau mobiles (12) qui leur sont liées sont connectées de telle sorte qu'elles puissent être déplacées dans les fentes (11a, 11b), en correspondance avec les forces d'actionnement qui sont imprimées via le tube (8) et les rouleaux mobiles (1).

6. Dispositif à rouleaux à auto-centrage selon l'une des revendications 1 - 5, **caractérisé en ce que** toutes les unités de rouleau mobiles (12) sont agencées sur un côté du dispositif de serrage (6), dans lequel la bague de serrage avant (6a) comporte des ouvertures au travers desquelles les gaines d'espaceur (10b) sont passées jusqu'à la bague de serrage arrière (6b).

7. Dispositif à rouleaux à auto-centrage selon l'une des revendications 1 - 6 , **caractérisé en ce qu'**il comporte quatre, six, huit, dix ou douze unités de rouleau mobiles (12).

8. Dispositif à rouleaux à auto-centrage selon l'une des revendications 1 - 7, **caractérisé en ce que** les éléments de ressort (7) sont des ressorts de compression ou d'extension ou des ressorts en élastomère.

9. Dispositif à rouleaux à auto-centrage selon l'une des revendications 1 - 8, **caractérisé en ce que** les bagues de serrage (6a, 6b) comportent des crochets ou des oeillets à l'intérieur desquels les éléments de ressort (7) sont accrochés.

10. Dispositif à rouleaux à auto-centrage selon l'une des revendications 1 - 9, **caractérisé en ce que** le(s) support(s) de rouleau avant et/ou arrière (3a) (3b) comporte(nt) une bague fixe qui connecte les supports de rouleau respectifs l'un à l'autre et qui a pour effet que le dispositif présente une rigidité en torsion.

11. Amortisseur de vibrations magnétique symétrique en rotation, **caractérisé en ce qu'**il comporte un dispositif à rouleaux à auto-centrage selon l'une des revendications 1 - 10.

12. Amortisseur de vibrations magnétique symétrique en rotation selon la revendication 11, comprenant en outre un tube interne et un tube externe, dans lequel le tube considéré est connecté fermement à un dispositif de support et l'autre tube peut être déplacé sans contact à l'intérieur du premier tube, et le tube considéré est constitué par un matériau conducteur non magnétisable tandis que l'autre tube est composé d'une ou de plusieurs bague(s) ou d'un ou de plusieurs segment(s) de bague magnétique(s) permanent(s) ou magnétisable(s) (14), dans lequel ces éléments magnétiques ou magnétisables sont agencés de telle sorte que les pôles Nord et Sud pointent soit radialement vers l'intérieur, soit radialement vers l'extérieur en relation avec l'axe longitudinal ou le tube non magnétisable, dans lequel le dispositif à rouleaux à auto-centrage assure un déplacement relatif exempt de frictions du tube conducteur non magnétique par rapport auxdits éléments de tube magnétiques ou magnétisables.

13. Amortisseur de vibrations magnétique symétrique en rotation selon la revendication 12, **caractérisé en ce que** le dispositif de support (5) est connecté fermement au tube externe (9), et le tube interne est déplacé par rapport au tube externe (9) par le dispositif à rouleaux.

14. Amortisseur de vibrations magnétique symétrique en rotation selon l'une des revendications 11 - 13, **caractérisé en ce que** ledit dispositif à rouleaux est installé avant et/ou après la région fonctionnelle de l'amortisseur magnétique.

15. Amortisseur de vibrations comprenant au moins un câble de pendule ou une tige de pendule qui comporte un poids de pendule (15) et au moins deux amortisseurs magnétiques symétriques en rotation selon l'une des revendications 11 - 14.
